# EUROPEAN PATENT APPLICATION

(11) **EP 3 932 227 A1**
(43) Date of publication of application: **05.01.2022**
(21) Application number: 19916788.3
(22) Date of filing: 06.11.2019
(51) Int. Cl.: A24F 47/00

(54) **LOW-TEMPERATURE BAKING SMOKING SET**

(30) Priority: 28.02.2019 CN 201920254648 U; 07.03.2019 CN 201910171474
(71) Applicant: Shenzhen First Union Technology Co., Ltd., Shenzhen, Guangdong 518000 (CN)
(72) Inventor: ZHANG, Yunkai, Shenzhen, Guangdong 518000 (CN); HU, Ruilong, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2019/116007
(87) International publication number: WO 2020/173125

(57) **Abstract**

A low-temperature baking smoking set, comprising: a heating substrate (31), which is in a hollow shape and comprises a heating bin used for containing a smoking substance therein; an infrared coating (32), coated on the outer side of the heating substrate (31); a first conductive module (331, 341, 351, 361, 371), provided outside the heating substrate (31) and in contact with the infrared coating (32); a second conductive module (332, 342, 352, 362, 372), provided outside the heating substrate (31) and in contact with the infrared coating (32), at least a part of the infrared coating (32) being positioned between the first conductive module (331, 341, 351, 361, 371) and the second conductive module (332, 342, 352, 362, 372); and a power supply unit (5), electrically connected to the first conductive module (331, 341, 351, 361, 371) and the second conductive module (332, 342, 352, 362, 372), so that infrared light generated by at least a part of the far infrared coating (32) after power up passes through the heating substrate (31) to carry out radiation heating on the smoking substance in the heating bin. Due to the strong penetrability of the infrared light, the infrared light can penetrate the peripheral smoking substance and enter the interior, so that the smoking substance is uniformly heated.

## Description

### TECHNICAL FIELD

The present disclosure relates to a technical field of cigarette equipment, and particularly relates to a low-temperature baking smoking set.

### BACKGROUND

Low-temperature baking smoking sets generally include a heating body and a power supply unit. The power supply unit provides electric power to the heating body. The heating body generates heat after being energized to bake the smoking substances contained in the low-temperature baking smoking set, thereby producing a direct smoke for the user. Because the low-temperature baking smoking set has good portability, does not produce open flames, and is environmentally friendly, it is favored by many smokers.

The heating methods of the existing low-temperature baking smoking utensils usually adopt a central heating type and a peripheral heating type. The central heating type is that the heating body is inserted into the smoking substance, and the peripheral heating type is that the cylindrical heating body wraps the smoking substance and directly contacts the smoking substance through the heating body, thereby transferring the heat generated on the heating body to the smoking substance, and realizing the baking of the smoking substance.

Both the central heating type and the peripheral heating type are heat conduction heating methods in which the heating body is in direct contact with the smoking substance. For the central heating type, the central temperature of the smoking substance is too high and the peripheral heating is incomplete; for the peripheral heating type, the heating will occur. The problem that the outer temperature of the smoking substance is too high and the central heating is not complete, that is, the central heating type or the peripheral heating type have the problem of uneven heating.

### SUMMARY

In order to solve the afore-mentioned technical problem of low-temperature baking smoking sets of existing technology to heat smoking substance unevenly, a low-temperature baking smoking set for heating smoking substance uniformly is provided in accordance with a preferred embodiment of the present disclosure. The low-temperature baking smoking set to includes: a heating base body being hollow, a heating cabinet for accommodating smoking substance therein being defined inside the heating base body; an infrared coating layer being coated on an outside of the heating base body; a first conductive module being disposed outside the heating base body, and being electrically contacted with the infrared coating layer; a second conductive module being disposed outside the heating base body, and being electrically contacted with the infrared coating layer, at least a portion of the infrared coating layer being disposed between the first conductive module and the second conductive module; and a powering unit electrically connected with the first conductive module and the second conductive module to electrify the at least a portion of the infrared coating layer for generating infrared lights so that the infrared lights penetrate through the heating base body to heat the smoking substance in the heating cabinet by infrared radiation.

Optionally, the first conductive module includes a first stripe portion extending along a lengthwise direction of the heating base body. The second conductive module includes a second stripe portion extending along the lengthwise direction of the heating base body. The first stripe portion and the second stripe portion are spaced from each other and disposed outside the heating base body. The first stripe portion and the second stripe portion are at least partially overlapped with each other along the lengthwise direction of the heating base body. Electric currents from the first stripe portion flow through the infrared coating layer along a circumferential direction of the heating base body toward the second stripe portion.

Optionally, the heating base body has a first end and a second end opposite to the first end. The first conductive module further includes a first ring portion. The first ring portion is sleeved at the first end of the heating base body. The first stripe portion extends from the first ring portion toward the second end of the heating base body. The second conductive module further includes a second ring portion. The second ring portion is sleeved at the second end of the heating base body. The second stripe portion extends from the second ring portion toward the first end of the heating base body.

Optionally, along the lengthwise direction of the heating base body, a length of the first stripe portion is less than a distance between the first ring portion and the second ring portion, and a length of the second stripe portion is less than the distance between the second ring portion and the first ring portion. On the heating base body, an area located between the first stripe portion and the second ring portion is not coated with the infrared coating layer, and an area located between the second stripe portion and the first ring portion is not coated with the infrared coating layer.

Optionally, the low-temperature baking smoking set further includes a third conductive module and a fourth conductive module. The third conductive module includes a third stripe portion extending along the lengthwise direction of the heating base body. The fourth conductive module includes a fourth stripe portion extending along the lengthwise direction of the heating base body. Along the lengthwise direction of the heating base body, the third stripe portion is not overlapped with the first stripe portion, and the fourth stripe portion is not overlapped with the second stripe portion. The third stripe portion is at least partially overlapped with the fourth stripe portion. Electric currents from the third stripe portion flow through the infrared coating layer along the circumferential direction of the heating base body toward the fourth stripe portion.

Optionally, the heating base body has a first end and a second end opposite to the first end. The first conductive module further includes a first ring portion surrounding outside the first end of the heating base body. The first stripe portion extends from the first ring portion toward the second end of the heating base body. The second conductive module further includes a second ring portion surrounding outside a middle of the heating base body. The second stripe portion extends from the second ring portion toward the first end of the heating base body. The third conductive module further includes a third ring portion surrounding outside the second end of the heating base body. The third stripe portion extends from the third ring portion toward the first end of the heating base body. The fourth conductive module further includes a fourth ring portion surrounding outside the middle of the heating base body. The fourth stripe portion extends from the fourth ring portion toward the second end of the heating base body.

Optionally, the second ring portion and the fourth ring portion are disposed to be overlapped together. Along the lengthwise direction of the heating base body, a length of the first stripe portion is less than a distance between the first ring portion and the second ring portion. An area located between the first stripe portion and the second ring portion is not coated with the infrared coating layer. A length of the second stripe portion is less than a distance between the second ring portion and the first ring portion. An area located between the second stripe portion and the first ring portion is not coated with the infrared coating layer. A length of the third stripe portion is less than a distance between the third ring portion and the fourth ring portion. An area located between the third stripe portion and the fourth ring portion is not coated with the infrared coating layer. A length of the fourth stripe portion is less than a distance between the fourth ring portion and the third ring portion. An area located between the fourth stripe portion and the third ring portion is not coated with the infrared coating layer.

Optionally, the low-temperature baking smoking set includes 2N conductive modules. Each of the 2N conductive modules includes a stripe portion extending along the lengthwise direction of the heating base body. Along the circumferential direction of the heating base body, the heating base body is divided into 2N spatially disposed portions by the stripe portions of the 2N conductive modules. An outside of the heating base body between every neighboring two of the stripe portions is coated with the infrared coating layer. Electric currents from a stripe portion flow through the infrared coating layer to reach a neighboring stripe portion along the circumferential direction of the heating base body. N is an integer more than or equal to 1.

Optionally, the low-temperature baking smoking set further includes a thermal insulator sleeved outside the heating base body. The thermal insulator includes an inner insulative tube, an outer insulative tube, aerogel disposed between the inner insulative tube and the outer insulative tube, and two seals disposed at two ends of the inner insulative tube and used to seal the aerogel.

Optionally, the first conductive module and the second conductive module are respectively electrically conductive rings being sleeved at the heating base body and being in contact with the infrared coating layer. The low-temperature baking smoking set further includes a thermal insulator sleeved outside the heating base body. The electrically conductive rings are clamped and fixed between the heating base body and the thermal insulator.

Optionally, an inner side of the inner insulative tube is coated with infrared reflective material.

Optionally, the first conductive module and the second conductive module are electrically conductive coating layers coated on the heating base body.

Optionally, the heating base body is made from silica glass, mica or ceramic.

Optionally, the low-temperature baking smoking set further includes a third conductive module. The third conductive module is disposed between the first conductive module and the second conductive module.

In comparison with the related art, the infrared coating layer is coated outside the heating base body. After the infrared coating layer is electrified, the infrared coating layer emits infrared lights to heat the smoking substance placed in the heating base body. Since infrared lights have a stronger penetrability and are able to penetrate smoking substance located at an outer periphery of the placed smoking substance in the heating base body to reach an interior of the placed smoking substance, the placed smoking substance in the heating base body can be heated much uniformly.

### BRIEF DESCRIPTION OF THE DRAWINGS

One or more embodiments in accordance with the present disclosure are illustratively exemplified for explanation through figures shown in the corresponding attached drawings. These exemplified descriptions do not constitute any limitation on the embodiments. The elements with the same reference numerals in the attached drawings are denoted as similar elements. Unless otherwise stated, the figures in the attached drawings do not constitute any scale limitation.
FIG 1 shows a schematic exploded perspective view of a low-temperature baking smoking set in accordance with a first preferred embodiment of the present disclosure.
FIG 2 shows a schematic perspective view of a heating assembly of the low-temperature baking smoking set in accordance with the first preferred embodiment of the present disclosure.
FIG 3 shows a schematic cross-sectional perspective view of a thermal insulator of the low-temperature baking smoking set in accordance with the first preferred embodiment of the present disclosure.
FIG 4 shows a schematic perspective view of a control assembly of the low-temperature baking smoking set in accordance with the first preferred embodiment of the present disclosure.
FIG. 5 shows a schematic partial perspective view of a thermal insulator and a heating assembly of a low-temperature baking smoking set in accordance with a second preferred embodiment of the present disclosure.
FIG. 6 shows a schematic perspective view of a heating assembly of a low-temperature baking smoking set in accordance with a third preferred embodiment of the present disclosure.
FIG. 7 shows a schematic perspective view of a heating assembly of a low-temperature baking smoking set in accordance with a fourth preferred embodiment of the present disclosure.
FIG. 8 shows a schematic perspective view of the heating assembly of FIG. 7 viewed from another viewing angle in accordance with the fourth preferred embodiment of the present disclosure.
FIG. 9 shows a schematic side elevational view of a heating assembly of a low-temperature baking smoking set after a fixing seat thereof is removed in accordance with a fifth preferred embodiment of the present disclosure.
FIG. 10 shows a schematic side elevational view of the heating assembly FIG. 9 viewed from another viewing angle in accordance with the fifth preferred embodiment of the present disclosure.
FIG. 11 shows a schematic top side elevational view of a heating assembly of a low-temperature baking smoking set after a fixing seat thereof is removed in accordance with a sixth preferred embodiment of the present disclosure.

Illustration of reference numerals in attached drawings in accordance with preferred embodiments of the present disclosure is as follows.

| Outer housing 1 | Main body 11 |
|---|---|
| Upper cover 12 | Lower cover 13 |
| Frame 2 | Heating Assembly 3 |
| Fixing Seat 30 | Heating Base Body 31 |
| First End a | Second End b |
| Infrared Coating Layer 32 | First conductive module 331, 341, 351, 361, 371 |
| First ring portion 3511, 3611 | First stripe portion 3512, 3612, 3712 |
| Second conductive module 332, 342, 352, 362, 372 | |
| Second ring portion 3521, 3621 | Second stripe portion 3522, 3622, 3722 |
| Third conductive module 333, 363, 373 | Third ring portion 3631 |
| Third stripe portion 3632, 3732 | Fourth conductive module 364, 374 |
| Fourth ring portion 3641 | Fourth stripe portion 3642, 3742 |
| Thermal insulator 4 | Inner insulative tube 41 |
| Outer insulative tube 42 | Seal 43 |
| Powering Unit 5 | Control Assembly 6 |
| Circuit Board 61 | Controller 62 |
| Switch Button 63 | Temperature Sensing Unit 7 |

### DETAILED DESCRIPTION

In order to facilitate best understanding of the present disclosure, the present disclosure will be illustrated in more detail below in conjunction with the attached drawings and preferred embodiments. It should be noted that when an element is expressed as "being fixed to" another element, this element may be directly on another element, or there may be one or more intervening elements between this element and another element. When an element is expressed as "being connected to" another element, this element can be directly connected to another element, or there may be one or more intervening elements between this element and another element. In addition, terminology used in the specification, such as "up", "down", "left", "right", "inside", "outside", or similar expressions, is only used for descriptive purposes.

Unless otherwise defined, any technical and scientific terminology used in this specification has the same meaning as commonly understood by those skilled in the technical field of the present disclosure. Terminology used in this specification of the present disclosure is only for a purpose of describing specific embodiments, and is not used to limit the present disclosure. Terminology such as "and/or" used in this specification includes any and all combinations of one or more related listed items.

### First Embodiment:

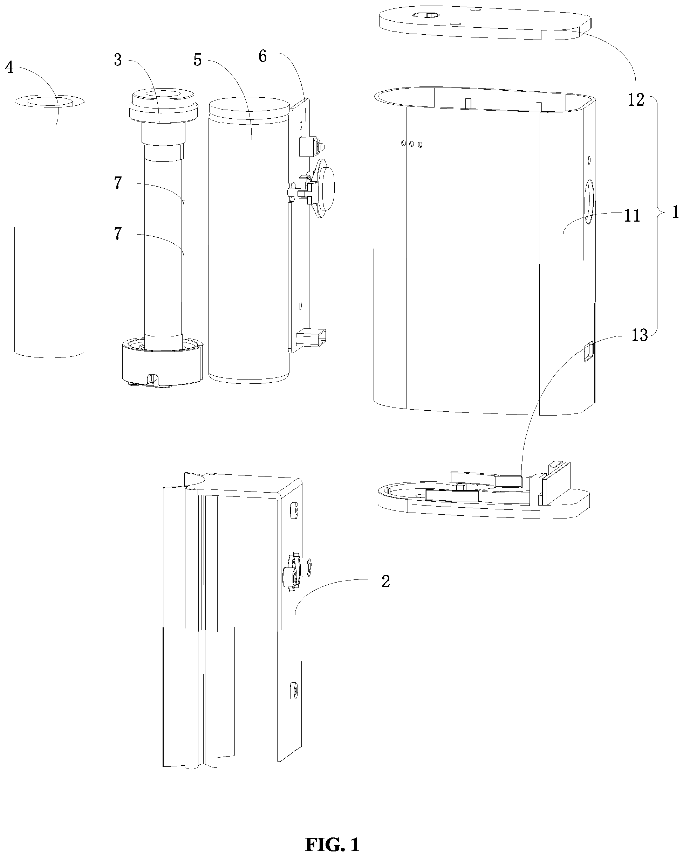

Referring to FIG. 1, a low-temperature baking smoking set in accordance with a first embodiment of the present disclosure mainly includes an outer housing 1, a frame 2, a heating assembly 3, a thermal insulator 4, a powering unit 5, a control assembly 6 and a temperature sensing unit 7.

The outer housing 1 includes a flat annular main body 11 having an upper opening and a lower opening, and an upper cover 12 and a lower cover 13 respectively disposed at the upper opening located at an upper side of the main body 11 and disposed at the lower opening located at a lower side of the main body 11 opposite to the upper side.

The frame 2 is received and fixed in the main body 11. The frame 2 is correspondingly mated with the main body 11, the upper cover 12 and the lower cover 13 in order to divide an interior of the main body 11 into a plurality of compartments.

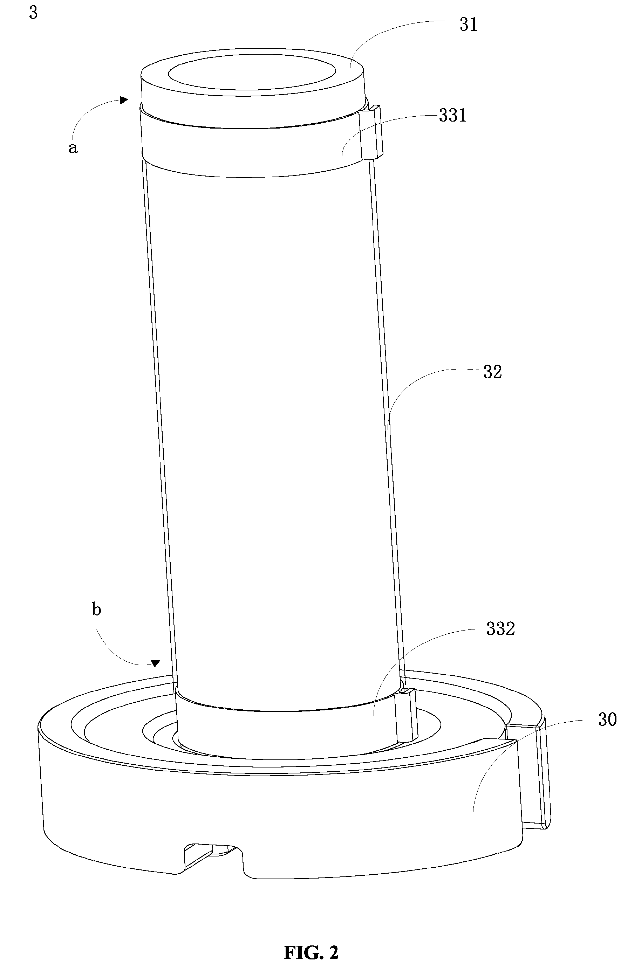

Referring to FIGS. 1-2, the heating assembly 3 includes a fixing seat 30, a heating base body 31, an infrared coating layer 32, a first conductive module 331 and a second conductive module 332.

The fixing seat 30 is disposed at the lower cover 13. The fixing seat 30 is located between the upper cover 12 and the lower cover 13. An air inlet penetrating through a center of the fixing seat 30 is disposed in the fixing seat 30. The heating base body 31 is a lengthwise hollow tubular structure. The heating base body 31 has a first end a and a second end b opposite to the first end a, i.e., the heating base body 31 has an upper end and a lower end opposite to the upper end. The heating base body 31 is made from material of high temperature resistance and transparency such as silica glass, ceramic or mica etc.

The infrared coating layer 32 is coated on an outside of the heating base body 31. The infrared coating layer 32 is acquired from firstly coating and printing a mixture on a surface of the heating base body 31 after the mixture is acquired from completely and uniformly blending an infrared electric heating ink, a ceramic power and an inorganic binder together, and then baking the coated mixture for solidification for 60 minutes. A thickness of the infrared coating layer 32 is 30 µm to 50 µm.

In the first preferred embodiment of the present disclosure, the first conductive module 331 and the second conductive module 332 are respectively electrically conductive coating layers coated at upper and lower ends of the heating base body 31. The electrically conductive coating layers are made from silver powder coatings. The electrically conductive coating layers are respectively electrically contacted with the infrared coating layer 32. The infrared coating layer 32 is disposed between the two electrically conductive coating layers.

It should be understandable that the first conductive module 331 and the second conductive module 332 can also be respectively made from metal material with high electric conductivity.

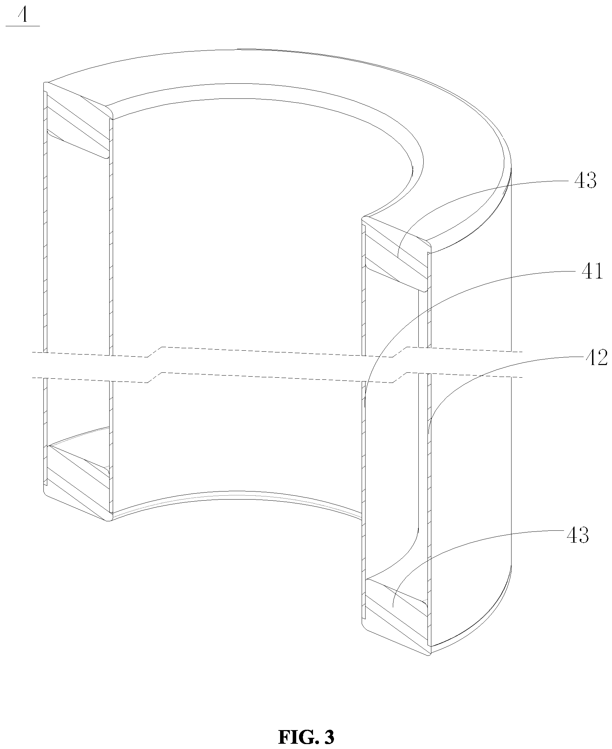

Referring to FIG. 1 and FIG. 3, the thermal insulator 4 is sleeved outside the heating base body 31. The thermal insulator 4 includes an inner insulative tube 41, an outer insulative tube 42, two ring-shaped seals 43 and aerogel (not shown in drawings) disposed between the inner insulative tube 41 and the outer insulative tube 42. The inner insulative tube 41 and the outer insulative tube 42 are disposed coaxially. The two seals 43 are respectively disposed at upper and lower ends of the inner insulative tube 41 and the outer insulative tube 42 in order to seal an accommodating space formed between the inner insulative tube 41 and the outer insulative tube 42. The aerogel can be silicon based, carbon based, sulfur based, metal oxide based and metal based. Since the aerogel contains more than 80% air therein, the aerogel is able to provide excellent heat insulative effects. An inner side of the inner insulative tube 41 is coated with infrared reflective material in order to reflect infrared lights emitted from the infrared coating layer 32 after being electrified back to an interior of the heating base body 31 for heating smoking substance placed inside the heating base body 31. As a result, an effective usage rate of the infrared lights emitted from the infrared coating layer 32 can be enhanced and heating efficiency can be enhanced.

The powering unit 5 is mainly used for providing electric energy for the heating assembly 3 and the control assembly 6. The powering unit 5 is received in the main body 11. In the first preferred embodiment of the present disclosure, the powering unit 5 is a rechargeable battery.

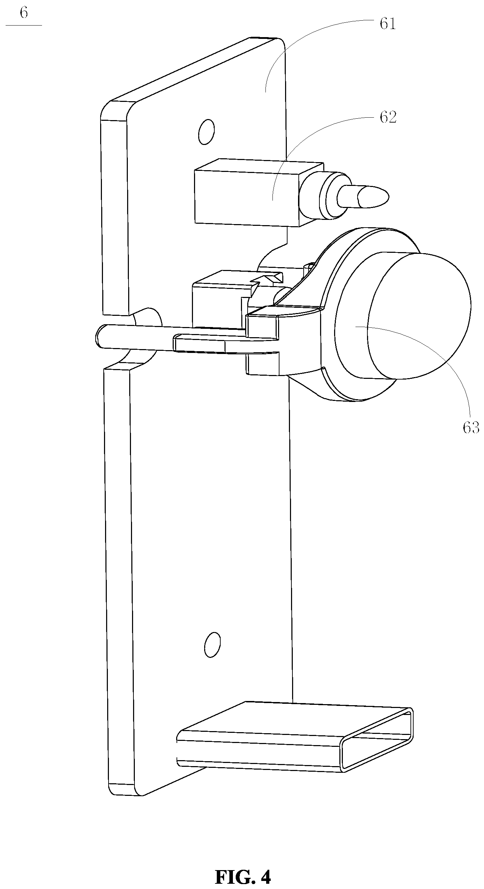

Referring FIG. 1 and FIG. 4, the control assembly 6 mainly includes a circuit board 61, a controller 62 and a switch button 63. The circuit board 61 is disposed at the frame 2. The controller 62 is fixed on the circuit board 61. The switch button 63 is protrusively disposed at the main body 11. The infrared coating layer 32 is electrified or is cut off from power via pressing the switch button 63 in order to achieve heating or inactiveness of the heating assembly 3.

The temperature sensing unit 7 is disposed at an outer face of the heating base body 31. The temperature sensing unit 7 is a temperature transducer used to detect a real-time temperature of the heating base body 31, and to transmit the detected real-time temperature to the controller 62. The controller 62 regulates an amount of electric currents passing through the infrared coating layer 32 according to the transmitted real-time temperature. In particular, when the temperature sensing unit 7 detects a lower real-time temperature inside the heating base body 31, for example, the temperature sensing unit 7 detects a real-time temperature of the heating base body 31 being less than 150°C, the controller 62 controls the powering unit 5 to output higher electric voltages to the electrically conductive coating layers. As a result, electric currents fed into the infrared coating layer 32 are raised in order to enhance heating efficiency of the smoking substance in the heating base body 31, and to reduce a waiting time for users to inhale a first puff of smoke. When the temperature sensing unit 7 detects a temperature of the heating base body 31 being between 150°C and 200°C, the controller 62 controls the powering unit 5 to output normal electric voltages to the electrically conductive coating layers. When the temperature sensing unit 7 detects a temperature of the heating base body 31 being between 200°C and 250°C, the controller 62 controls the powering unit 5 to output lower electric voltages to the electrically conductive coating layers. When the temperature sensing unit 7 detects a temperature of the inner side of the heating base body 31 being more than 250°C, the controller 62 controls the powering unit 5 to stop output of electric voltages to the electrically conductive coating layers.

In the first preferred embodiment of the present disclosure, the infrared coating layer 32 is coated outside the heating base body 31. After the infrared coating layer 32 is electrified to emit infrared lights, the emitted infrared lights penetrate through the heating base body 31 to heat the smoking substance placed in the heating base body 31 by infrared radiation. Since infrared lights have a stronger penetrability and are able to penetrate smoking substance located at an outer periphery of the placed smoking substance in the heating base body 31 to reach an interior of the placed smoking substance, the placed smoking substance in the heating base body 31 can be heated much uniformly.

### Second Embodiment:

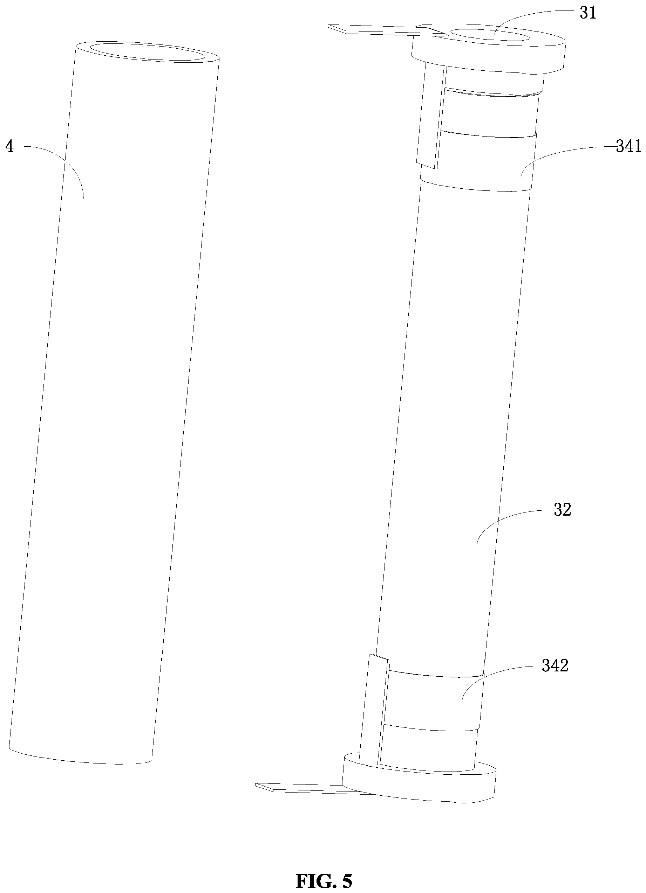

Referring to FIG. 5, a heating assembly 3 of a low-temperature baking smoking set in accordance with a second embodiment of the present disclosure is provided. A first conductive module 341 and a second conductive module 342 of the heating assembly 3 are respectively electrically conductive rings sleeved at the heating base body 31. The electrically conductive rings are clamped and fixed between the heating base body 31 and the thermal insulator 4. The electrically conductive rings are excellently electrically contacted with the infrared coating layer 32 on the heating base body 31 through the electrically conductive rings being clamped and fixed between the thermal insulator 4 and the heating base body 31.

### Third Embodiment:

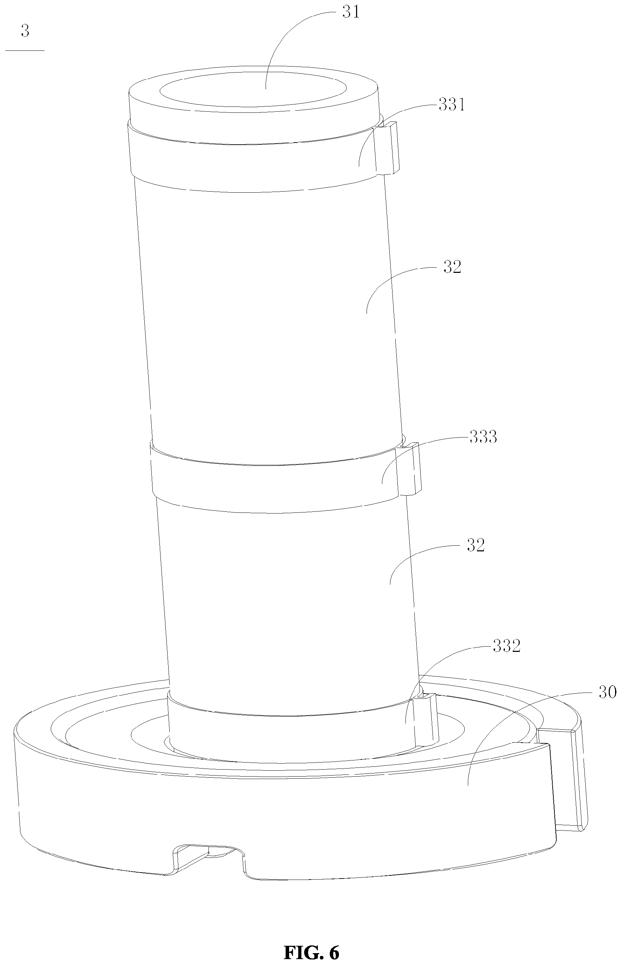

Referring to FIG. 6, a heating assembly 3 of a low-temperature baking smoking set in accordance with a third embodiment of the present disclosure is provided. The heating assembly 3 of the third embodiment of the present disclosure, mainly different from the first embodiment of the present disclosure, further has a third conductive module 333. The third conductive module 333 is located between the first conductive module 331 and the second conductive module 332. The infrared coating layer 32 is divided into two portions by the first conductive module 331, the second conductive module 332 and the third conductive module 333. The two portions of the infrared coating layer 32 can be separately electrified through powering the three conductive modules and cutting off power of the three conductive modules. As a result, the smoking substance accommodated within the heating base body 31 can be heated section by section.

### Fourth Embodiment:

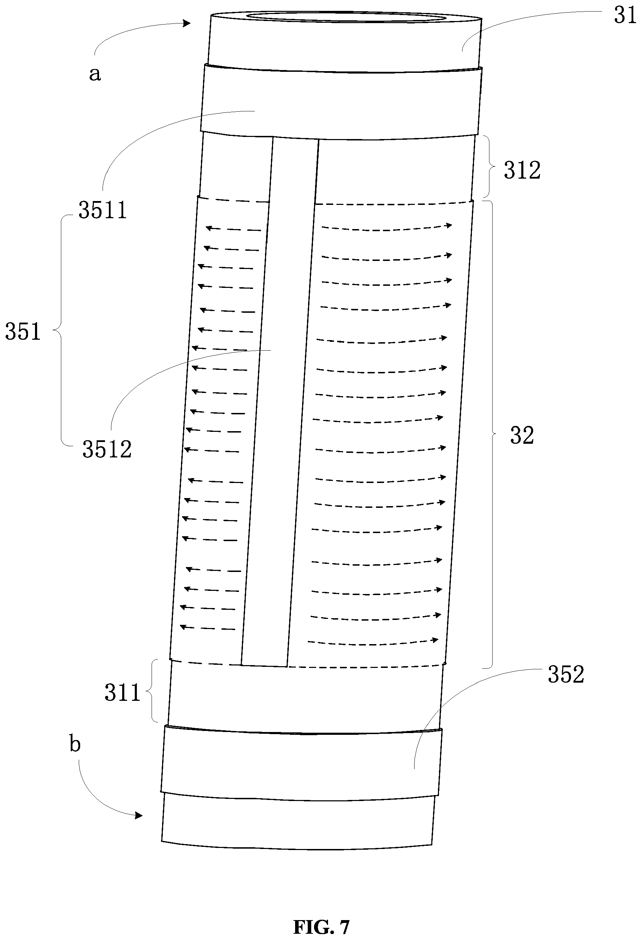

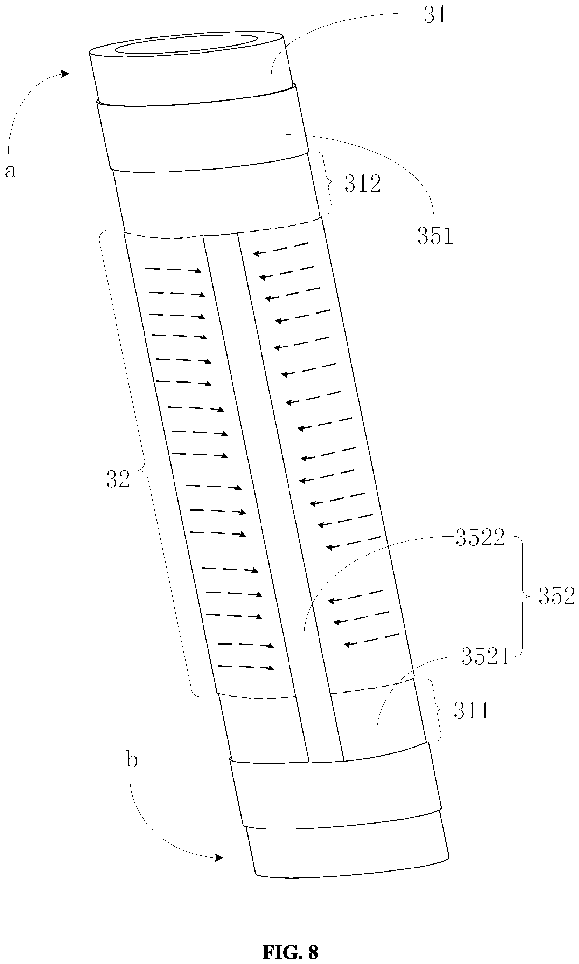

Referring to FIGS. 7-8, a heating assembly 3 of a low-temperature baking smoking set after a fixing seat 30 of the heating assembly 3 is removed in accordance with a fourth embodiment of the present disclosure is provided. A first conductive module 351 and a second conductive module 352 of the heating assembly 3, mainly different from the heating assembly 3 of the first embodiment of the present disclosure, are made from metal material with high electric conductivity, for example, can be made from gold and its alloy, silver and its alloy or copper and its alloy. The first conductive module 351 includes a first ring portion 3511 and a first stripe portion 3512. The first ring portion 3511 is sleeved at the first end a of the heating base body 31. The first stripe portion 3512 extends from the first ring portion 3511 toward the second end b of the heating base body 31 along a lengthwise direction of the heating base body 31. In other words, the first stripe portion 3512 extends downwards from the first ring portion 3511 along an axial direction of the heating base body 31.

The second conductive module 352 includes a second ring portion 3521 and a second stripe portion 3522. The second ring portion 3521 is sleeved at the second end b of the heating base body 31. The second stripe portion 3522 extends from the second ring portion 3521 toward the first end a of the heating base body 31 along the lengthwise direction of the heating base body 31. In other words, the second stripe portion 3522 extends upwards from the second ring portion 3521 along the axial direction of the heating base body 31.

Along the lengthwise direction of the heating base body 31, a length of the first stripe portion 3512 is less than a distance between the first ring portion 3511 and the second ring portion 3521. In other words, the first stripe portion 3512 is not in contact with the second ring portion 3521. Along the lengthwise direction of the heating base body 31, a length of the second stripe portion 3522 is less than a distance between the second ring portion 3521 and the first ring portion 3511. In other words, the second stripe portion 3522 is not in contact with the first ring portion 3511.

Along the lengthwise direction of the heating base body 31, an area 311 located between the first stripe portion 3512 and the second ring portion 3521 is not coated with the infrared coating layer 32, and an area 312 located between the second stripe portion 3522 and the first ring portion 3511 is not coated with the infrared coating layer 32. The area 311 and the area 312 are ring-shaped areas. In other words, each of the area 311 and the area 312 surrounding an entire circumferential face of the heating base body 31 is not coated with the infrared coating layer 32. The infrared coating layer 32 is coated at a portion of the heating base body 31 where the first stripe portion 3512 and the second stripe portion 3522 are overlapped with each other along the axial direction of the heating base body 31.

The first stripe portion 3512 and the second stripe portion 3522 are respectively located at two opposite lateral sides of the heating base body 31. When the first ring portion 3511 and the second ring portion 3521 are electrically connected with the powering unit 5 and are electrified thereby, electric currents from the first stripe portion 3512 flow through the infrared coating layer 32 along a circumferential direction of the heating base body 31 toward the second stripe portion 3522.

In comparison with existing methods allowing electric currents flow from the first end a of the heating base body 31 toward the second end b along the axial direction of the heating base body 31, electric currents in the fourth embodiment of the present disclosure flow along the circumferential direction of the heating base body 31 to shorten a flowing distance of the electric currents in the infrared coating layer 32 and to lessen an electric resistance of the infrared coating layer 32 during a flowing path of the electric currents. In a condition of the same electric resistance, the infrared coating layer 32 of the fourth embodiment of the present disclosure is thinner to save manufacturing costs and to enhance a market competitive power of the low-temperature baking smoking set in accordance with the fourth embodiment of the present disclosure.

### Fifth Embodiment:

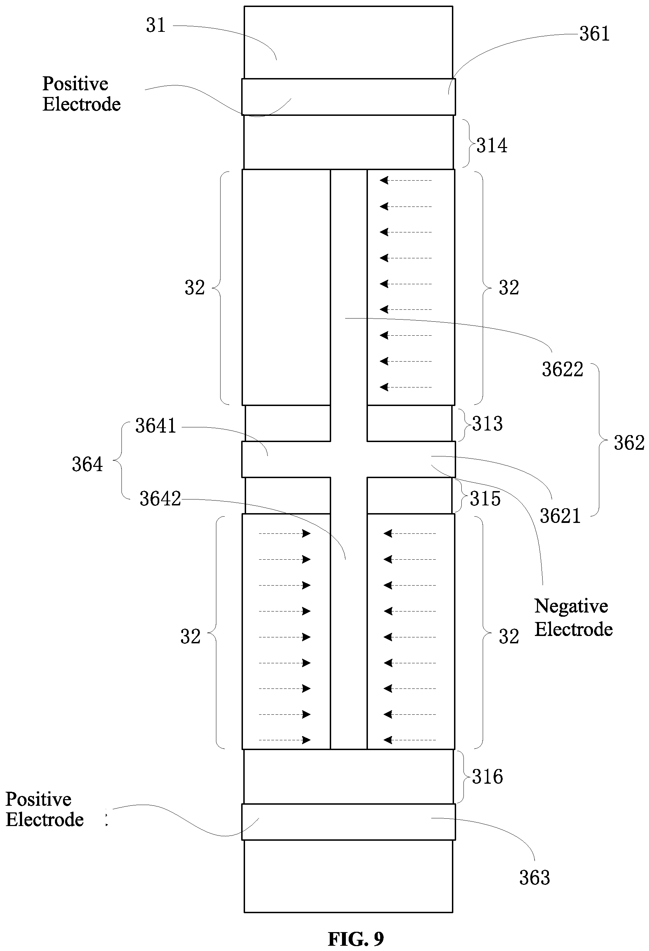

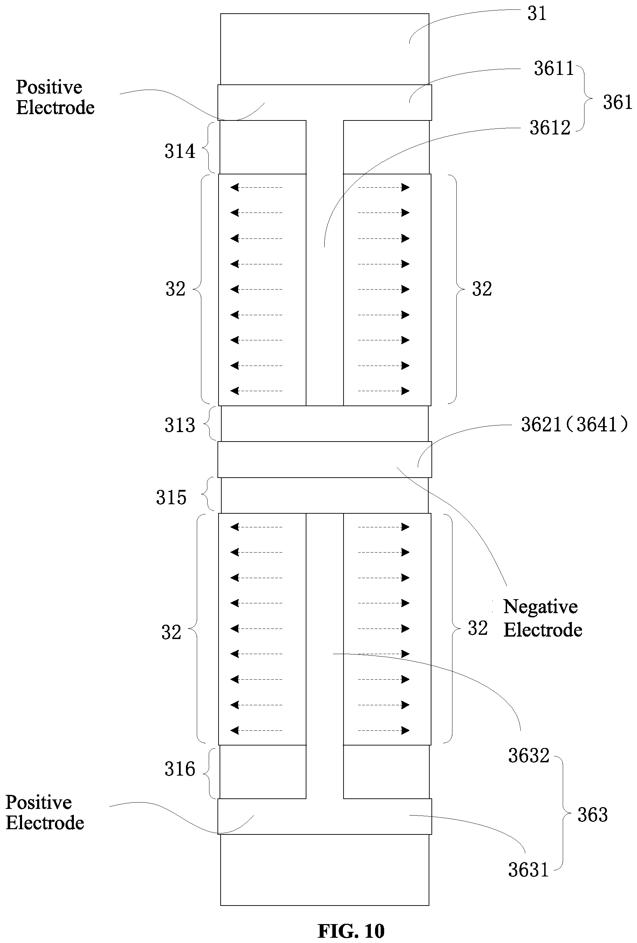

Referring to FIGS. 9-10, a heating assembly 3 of a low-temperature baking smoking set after a fixing seat 30 of the heating assembly 3 is removed in accordance with a fifth embodiment of the present disclosure is provided. The heating assembly 3 of the fifth embodiment of the present disclosure, mainly different from the first embodiment of the present disclosure, further includes a third conductive module 363 and a fourth conductive module 364.

The first conductive module 361 includes a first ring portion 3611 and a first stripe portion 3612. The first ring portion 3611 is sleeved at the first end a of the heating base body 31. The first stripe portion 3612 extends from the first ring portion 3611 toward the second end b of the heating base body 31 along the lengthwise direction of the heating base body 31. In other words, the first stripe portion 3612 extends downwards from the first ring portion 3611 along the axial direction of the heating base body 31.

The second conductive module 362 includes a second ring portion 3621 and a second stripe portion 3622. The second ring portion 3621 is sleeved at an outside of a middle of the heating base body 31. The second stripe portion 3622 extends from the second ring portion 3621 toward the first end a of the heating base body 31 along the lengthwise direction of the heating base body 31. In other words, the second stripe portion 3622 extends upwards from the second ring portion 3621 along the axial direction of the heating base body 31. Along the lengthwise direction of the heating base body 31, the second stripe portion 3622 is mostly overlapped with the first stripe portion 3612. Along the circumferential direction of the heating base body 31, the first stripe portion 3612 and the second stripe portion 3622 are symmetrically distributed around the outside of the heating base body 31.

Along the lengthwise direction of the heating base body 31, a length of the first stripe portion 3612 is less than a distance between the first ring portion 3611 and the second ring portion 3621. In other words, the first stripe portion 3612 is not in contact with the second ring portion 3621. Along the lengthwise direction of the heating base body 31, a length of the second stripe portion 3622 is less than a distance between the second ring portion 3621 and the first ring portion 3611. In other words, the second stripe portion 3622 is not in contact with the first ring portion 3611.

Along the lengthwise direction of the heating base body 31, an area 313 located between the first stripe portion 3612 and the second ring portion 3621 is not coated with the infrared coating layer 32, and an area 314 located between the second stripe portion 3622 and the first ring portion 3611 is not coated with the infrared coating layer 32. The area 313 and the area 314 are ring-shaped areas. In other words, each of the area 313 and the area 314 surrounding the entire circumferential face of the heating base body 31 is not coated with the infrared coating layer 32. The infrared coating layer 32 is coated at a portion of the heating base body 31 where the first stripe portion 3612 and the second stripe portion 3622 are overlapped with each other along the axial direction of the heating base body 31.

The third conductive module 363 includes a third ring portion 3631 and a third stripe portion 3632. The third ring portion 3631 surrounds around an outside of the second end b of the heating base body 31. The third stripe portion 3632 extends from the third ring portion 3631 toward the first end a of the heating base body 31 along the lengthwise direction of the heating base body 31. In other words, the third stripe portion 3632 extends upwards from the third ring portion 3631 along the axial direction of the heating base body 31. The third stripe portion 3632 is not overlapped with the first stripe portion 3612.

The fourth conductive module 364 includes a fourth ring portion 3641 and a fourth stripe portion 3642. The fourth ring portion 3641 surrounds around the outside of the middle of the heating base body 31. The fourth stripe portion 3642 extends from the fourth ring portion 3641 toward the second end b of the heating base body 31 along the lengthwise direction of the heating base body 31. In other words, the fourth stripe portion 3642 extends downwards from the fourth ring portion 3641 along the axial direction of the heating base body 31. The fourth stripe portion 3642 is not overlapped with the second stripe portion 3622.

The fourth ring portion 3641 and the second ring portion 3621 are disposed to be overlapped together. In other words, the same fourth ring portion 3641 is commonly used by the fourth stripe portion 3642 and the second stripe portion 3622, i.e., the second stripe portion 3622 and the fourth stripe portion 3642 extend respectively from the fourth ring portion 3641 (the second ring portion 3621) toward the first end a and the second end b of the heating base body 31. Along the lengthwise direction of the heating base body 31, the fourth stripe portion 3642 is mostly overlapped with the third stripe portion 3632. Along the circumferential direction of the heating base body 31, the third stripe portion 3632 and the fourth stripe portion 3642 are symmetrically distributed around the outside of the heating base body 31.

Along the lengthwise direction of the heating base body 31, a length of the third stripe portion 3632 is less than a distance between the third ring portion 3631 and the fourth ring portion 3641. An area 315 located between the third stripe portion 3632 and the fourth ring portion 3641 is not coated with the infrared coating layer 32. A length of the fourth stripe portion 3642 is less than a distance between the fourth ring portion 3641 and the third ring portion 3631. An area 316 located between the fourth stripe portion 3642 and the third ring portion 3631 is not coated with the infrared coating layer 32. The area 315 and the area 316 are ring-shaped areas. In other words, each of the area 315 and the area 316 surrounding the entire circumferential face of the heating base body 31 is not coated with the infrared coating layer 32.

The first ring portion 3611 and the third ring portion 3631 are respectively electrically connected with a positive electrode of the powering unit 5. The second ring portion 3621 or the fourth ring portion 3641 is electrically connected with a negative electrode of the powering unit 5.

Understandably, in certain other embodiments, the second ring portion 3621 and the fourth ring portion 3641 can be not overlapped together. In other words, the second ring portion 3621 and the fourth ring portion 3641 are separated and spaced from each other to surround around the outside of the heating base body 31.

After users touch or press the switch button 63 of the low-temperature baking smoking set, the low-temperature baking smoking set starts to work. First of all, the controller 62 controls the third ring portion 3631 being electrically conducted with the positive electrode of the powering unit 5, and controls the fourth ring portion 3641 being electrically conducted with the negative electrode of the powering unit 5. An electric voltage difference is formed between third stripe portion 3632 and the fourth stripe portion 3642. Electric currents from the third stripe portion 3632 flow through the infrared coating layer 32 between the third stripe portion 3632 and the fourth stripe portion 3642 along the circumferential direction of the heating base body 31 toward the fourth stripe portion 3642. The infrared coating layer 32 between the third ring portion 3631 and the fourth ring portion 3641 generates infrared lights in order to heat smoking substance of cigarettes located between the third ring portion 3631 and the fourth ring portion 3641 by infrared radiation. When the temperature sensing unit 7 detects a temperature on the heating base body 31 reaching a preset temperature to indicate that the smoking substance of cigarettes located between the third ring portion 3631 and the fourth ring portion 3641 is completely baked, the controller 62 controls to disconnect and cut off the third ring portion 3631 and the fourth ring portion 3641 from the powering unit 5.

In the meantime, the controller 62 controls the first ring portion 3611 being electrically conducted with the positive electrode of the powering unit 5, and controls the second ring portion 3621 being electrically conducted with the negative electrode of the powering unit 5. An electric voltage difference is formed between first stripe portion 3612 and the second stripe portion 3622. Electric currents from the first stripe portion 3612 flow through the infrared coating layer 32 between the first stripe portion 3612 and the second stripe portion 3622 along the circumferential direction of the heating base body 31 toward the second stripe portion 3622. The infrared coating layer 32 between the first ring portion 3611 and the second ring portion 3621 generates infrared lights in order to heat smoking substance of cigarettes located between the first ring portion 3611 and the second ring portion 3621 by infrared radiation. When the temperature sensing unit 7 detects a temperature on the heating base body 31 reaching the preset temperature to indicate that the smoking substance of cigarettes located between the first ring portion 3611 and the second ring portion 3621 is completely baked, the controller 62 controls to disconnect and cut off the first ring portion 3611 and the second ring portion 3621 from the powering unit 5. The cigarettes are then completely baked.

In the fifth embodiment of the present disclosure, the controller 62 is used to control in sequence at different time periods that the third ring portion 3631 and the fourth ring portion 3641 are respectively electrically conducted with the positive and negative electrodes of the powering unit 5, and that the first ring portion 3611 and the second ring portion 3621 are respectively electrically conducted with the positive and negative electrodes of the powering unit 5. As a result, smoking portions of cigarettes are heated section by section to shorten a time calculated from the low-temperature baking smoking set starting to work to a first puff of smoke being generated. Experience of users is therefore improved, and a smoking rate of cigarettes is enhanced.

Understandably, the first ring portion 3611, the second ring portion 3621, the third ring portion 3631 and the fourth ring portion 3641 are mainly used as electrically conductive triggering members with the positive electrode or the negative electrode of the powering unit 5. They are not necessary to be ring-shaped, and can be set as any arbitrary shape based on required conditions. A ring shape is benefit for contact electric currents being uniformly distributed so that a contact resistance can be reduced for electric currents flowing into the first stripe portion 3612, the second stripe portion 3622, the third stripe portion 3632 and the fourth stripe portion 3642. Understandably, in certain other embodiments, smoking portions of cigarettes can be divided into sections of other numbers, such as three sections, four sections or five sections, etc., for being separately heated.

### Sixth Embodiment:

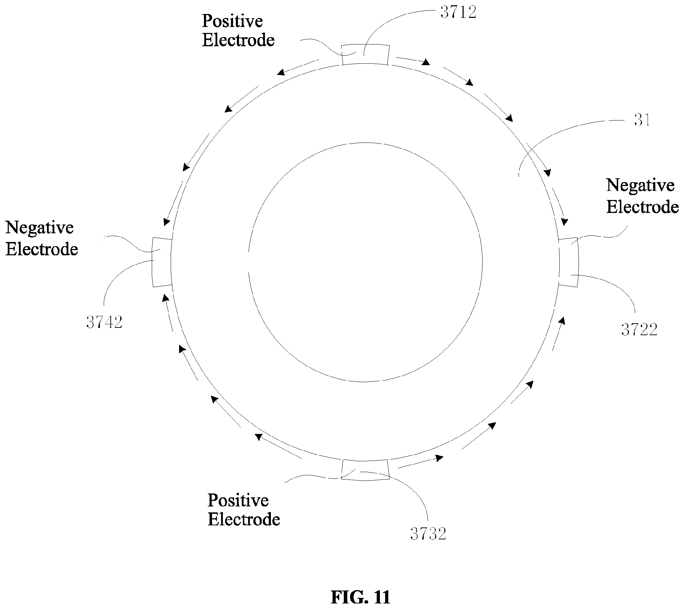

Referring to FIG. 11, a heating assembly 3 of a low-temperature baking smoking set after a fixing seat 30 of the heating assembly 3 is removed in accordance with a sixth embodiment of the present disclosure is provided from a top side view. The heating assembly 3 of the sixth embodiment of the present disclosure, mainly different from the fourth embodiment of the present disclosure, further includes a third conductive module and a fourth conductive module.

The first conductive module includes a first stripe portion 3712 extending along the lengthwise direction of the heating base body 31. The second conductive module includes a second stripe portion 3722 extending along the lengthwise direction of the heating base body 31. The third conductive module includes a third stripe portion 3732 extending along the lengthwise direction of the heating base body 31. The fourth conductive module includes a fourth stripe portion 3742 extending along the lengthwise direction of the heating base body 31.

Along the circumferential direction of the heating base body 31, the first stripe portion 3712, the second stripe portion 3722, the third stripe portion 3732 and the fourth stripe portion 3742 are disposed clockwise in sequence and equidistantly around the outside of the heating base body 31. Electric currents from the first stripe portion 3712 flows clockwise through the infrared coating layer 32 to reach the second stripe portion 3722 along the circumferential direction of the heating base body 31. Besides, electric currents from the first stripe portion 3712 flows counterclockwise through the infrared coating layer 32 to reach the fourth stripe portion 3742 along the circumferential direction of the heating base body 31. Electric currents from the third stripe portion 3732 flows clockwise through the infrared coating layer 32 to reach the fourth stripe portion 3742 along the circumferential direction of the heating base body 31. Besides, electric currents from the third stripe portion 3732 flows counterclockwise through the infrared coating layer 32 to reach the second stripe portion 3722 along the circumferential direction of the heating base body 31.

Understandably, the first stripe portion 3712 and the third stripe portion 3732 are respectively electrically connected with the positive electrode of the powering unit 5. The second stripe portion 3722 and the fourth stripe portion 3742 are respectively electrically connected with the negative electrode of the powering unit 5.

In comparison with the fourth embodiment, along the circumferential direction of the heating base body 31, the infrared coating layer 32 coated outside the heating base body 31 is divided into four portions by the first stripe portion 3712, the second stripe portion 3722, the third stripe portion 3732 and the fourth stripe portion 3742 in order to further shorten a flowing distance of electric currents along the infrared coating layer 32, and further reduce a resistance of the infrared coating layer 32 in a flowing path of electric currents. In the same resistance condition, a thickness of the infrared coating layer 32 of the sixth embodiment of the present disclosure to be made can be thinner, and further can be made in a cost saving way. As a result, a market competitive power of the low-temperature baking smoking set provided in the sixth embodiment of the present disclosure is enhanced.

Understandably, in certain other embodiments, the infrared coating layer 32 can also be divided into six sections, eight sections and ten sections along the circumferential direction of the heating base body 31 in order to further shorten a flowing distance of electric currents along the infrared coating layer 32.

It should be noted that the specification of the present disclosure and its accompanying drawings provides preferred embodiments of the present disclosure. However, the present disclosure can be implemented in many different forms and is not limited to the preferred embodiments described in this specification. These preferred embodiments are not intended to make additional restrictions on the content of the present disclosure, and the purpose of providing the preferred embodiments is to make understanding of the disclosure of the present disclosure become more thorough and comprehensive. In addition, the above technical features continue to be combined with one another to form various embodiments not listed above, the combinations are all regarded as being within the scope of the description of the present disclosure. Furthermore, for those of ordinary skill in the art, improvements or transformations can be made based on the above descriptions, and all these improvements and transformations should belong to the protection scope of the appended claims of the present disclosure.

## Claims

1. A low-temperature baking smoking set, comprising:
a heating base body being hollow, a heating cabinet for accommodating smoking substance therein being defined inside the heating base body;
an infrared coating layer being coated on an outside of the heating base body;
a first conductive module being disposed outside the heating base body, and being electrically contacted with the infrared coating layer;
a second conductive module being disposed outside the heating base body, and being electrically contacted with the infrared coating layer, at least a portion of the infrared coating layer being disposed between the first conductive module and the second conductive module; and
a powering unit electrically connected with the first conductive module and the second conductive module to electrify the at least a portion of the infrared coating layer for generating infrared lights so that the infrared lights penetrate through the heating base body to heat the smoking substance in the heating cabinet by infrared radiation.

2. The low-temperature baking smoking set as claimed in claim 1, wherein the first conductive module comprises a first stripe portion extending along a lengthwise direction of the heating base body, the second conductive module comprises a second stripe portion extending along the lengthwise direction of the heating base body, the first stripe portion and the second stripe portion are spaced from each other and disposed outside the heating base body, the first stripe portion and the second stripe portion are at least partially overlapped with each other along the lengthwise direction of the heating base body, electric currents from the first stripe portion flow through the infrared coating layer along a circumferential direction of the heating base body toward the second stripe portion.

3. The low-temperature baking smoking set as claimed in claim 2, wherein the heating base body comprises a first end and a second end opposite to the first end, the first conductive module further comprises a first ring portion, the first ring portion is sleeved at the first end of the heating base body, the first stripe portion extends from the first ring portion toward the second end of the heating base body; and
the second conductive module further comprises a second ring portion, the second ring portion is sleeved at the second end of the heating base body, the second stripe portion extends from the second ring portion toward the first end of the heating base body.

4. The low-temperature baking smoking set as claimed in claim 3, wherein, along the lengthwise direction of the heating base body, a length of the first stripe portion is less than a distance between the first ring portion and the second ring portion, and a length of the second stripe portion is less than the distance between the second ring portion and the first ring portion; and, on the heating base body, an area located between the first stripe portion and the second ring portion is not coated with the infrared coating layer, and an area located between the second stripe portion and the first ring portion is not coated with the infrared coating layer.

5. The low-temperature baking smoking set as claimed in claim 2, wherein the low-temperature baking smoking set further comprises a third conductive module and a fourth conductive module, the third conductive module comprises a third stripe portion extending along the lengthwise direction of the heating base body, the fourth conductive module comprises a fourth stripe portion extending along the lengthwise direction of the heating base body; and, along the lengthwise direction of the heating base body, the third stripe portion is not overlapped with the first stripe portion, and the fourth stripe portion is not overlapped with the second stripe portion, the third stripe portion is at least partially overlapped with the fourth stripe portion, electric currents from the third stripe portion flow through the infrared coating layer along the circumferential direction of the heating base body toward the fourth stripe portion.

6. The low-temperature baking smoking set as claimed in claim 5, wherein the heating base body comprises a first end and a second end opposite to the first end, the first conductive module further comprises a first ring portion surrounding outside the first end of the heating base body, the first stripe portion extends from the first ring portion toward the second end of the heating base body;
the second conductive module further comprises a second ring portion surrounding outside a middle of the heating base body, the second stripe portion extends from the second ring portion toward the first end of the heating base body;
the third conductive module further comprises a third ring portion surrounding outside the second end of the heating base body, the third stripe portion extends from the third ring portion toward the first end of the heating base body; and
the fourth conductive module further comprises a fourth ring portion surrounding outside the middle of the heating base body, the fourth stripe portion extends from the fourth ring portion toward the second end of the heating base body.

7. The low-temperature baking smoking set as claimed in claim 6, wherein the second ring portion and the fourth ring portion are disposed to be overlapped together; along the lengthwise direction of the heating base body, a length of the first stripe portion is less than a distance between the first ring portion and the second ring portion, an area located between the first stripe portion and the second ring portion is not coated with the infrared coating layer, a length of the second stripe portion is less than a distance between the second ring portion and the first ring portion, an area located between the second stripe portion and the first ring portion is not coated with the infrared coating layer, a length of the third stripe portion is less than a distance between the third ring portion and the fourth ring portion, an area located between the third stripe portion and the fourth ring portion is not coated with the infrared coating layer, a length of the fourth stripe portion is less than a distance between the fourth ring portion and the third ring portion, an area located between the fourth stripe portion and the third ring portion is not coated with the infrared coating layer.

8. The low-temperature baking smoking set as claimed in claim 1, wherein the low-temperature baking smoking set comprises 2N conductive modules, each of the 2N conductive modules comprises a stripe portion extending along a lengthwise direction of the heating base body, along a circumferential direction of the heating base body, the heating base body is divided into 2N spatially disposed portions by the stripe portions of the 2N conductive modules, an outside of the heating base body between every neighboring two of the stripe portions is coated with the infrared coating layer, electric currents from a stripe portion of the stripe portions flow through the infrared coating layer to reach a neighboring stripe portion of the stripe portions along the circumferential direction of the heating base body, N is an integer more than or equal to 1.

9. The low-temperature baking smoking set as claimed in claim 1, wherein the low-temperature baking smoking set further comprises a thermal insulator sleeved outside the heating base body, the thermal insulator comprises an inner insulative tube, an outer insulative tube, aerogel disposed between the inner insulative tube and the outer insulative tube, and two seals disposed at two ends of the inner insulative tube and used to seal the aerogel.

10. The low-temperature baking smoking set as claimed in claim 1, wherein the first conductive module and the second conductive module are respectively electrically conductive rings being sleeved at the heating base body and being in contact with the infrared coating layer, the low-temperature baking smoking set further comprises a thermal insulator sleeved outside the heating base body, the electrically conductive rings are clamped and fixed between the heating base body and the thermal insulator.

11. The low-temperature baking smoking set as claimed in claim 9, wherein an inner side of the inner insulative tube is coated with infrared reflective material.

12. The low-temperature baking smoking set as claimed in claim 1, wherein the first conductive module and the second conductive module are electrically conductive coating layers coated on the heating base body.

13. The low-temperature baking smoking set as claimed in claim 1, wherein the heating base body is made from silica glass, mica or ceramic.

14. The low-temperature baking smoking set as claimed in claim 1, wherein the low-temperature baking smoking set further comprises a third conductive module, the third conductive module is disposed between the first conductive module and the second conductive module.
